# EUROPEAN PATENT APPLICATION

(11) **EP 4 852 261 A1**
(43) Date of publication of application: **09.12.2026**
(21) Application number: 25180969.5
(22) Date of filing: 05.06.2025
(51) Int. Cl.: H02J 3/00, H02J 3/16, H02J 3/01, H02J 3/18, H02J 15/00, H02J 3/12

(54) **ELECTROLYSIS SYSTEM AND METHOD FOR CONTROLLING SUCH A SYSTEM UNDER LOW VOLTAGE RIDE THROUGH EVENTS**

(71) Applicant: Siemens Energy Global GmbH & Co. KG, 81739 München (DE)
(72) Inventor: Loku, Fisnik, 90439 Nürnberg (DE); Buratckii, Artem, 90459 Nürnberg (DE); Bendig, Marvin, 90513 Zirndorf (DE)

(57) **Abstract**

Electrolysis system and method for controlling such a system under Low Voltage Ride Through (LVRT) events are provided. The system comprises a transformer unit, rectifier units connected to the transformer unit, and rows of electrolysis modules connected to the rectifier units. The method allows measuring AC voltage at the transformer unit indicative of a condition of the LVRT event. The method further allows generating a feedforward signal configured to adjust a reference control parameter, such as a firing angle or duty cycle, or a switching pattern configured to control power switching circuitry in the rectifiers considering the condition of the LVRT event. Upon detection of the LVRT event, the reference control parameter or the switching pattern remain unchanged by the feedforward signal, and, upon the measured AC voltage indicating recovery from the LVRT event, the feedforward signal is configured to impose a change to the reference control parameter or the switching pattern. This is effective to quickly and reliably inhibit overshoot of the DC current that otherwise the system would be subjected to upon clearance of the LVRT event.

## Description

### TECHNICAL FIELD

Disclosed embodiments relate to electrolysis systems and method for controlling such systems under Fault Ride Through (FRT) events, and, more specifically, in connection with Low Voltage Ride Through (LVRT) events.

### BACKGROUND

Connecting large electrolysis systems to an electrical grid requires compliance with or fulfillment of applicable grid code requirements. Part of these requirements - especially for large plants - is a Fault Ride Through capability. FRT refers to the capability of power generation systems, such as involving renewable energy sources like wind turbines and solar photovoltaic (PV) systems, or a large number of consumers, to remain connected to the electrical grid during short-duration voltage disturbances or faults. This capability is crucial for maintaining grid stability and reliability.

Important for the grid operator is the availability of the load after the fault is cleared, the so-called post-fault recovery behavior. Should a large plant trip, such as during short duration disturbances within the grid, the grid operator would struggle to appropriately re-balance the power exchange between the plant and the grid, such as shortly after occurrence of an LVRT event and shortly after clearance of the LVRT event. The power plants producing the power cannot be adjusted sufficiently quickly. Accordingly, just a certain amount of power is generally allowed to trip. Moreover, it is desirable for consumers to remain connected in case of relatively mild deviations from the permissible voltage band or range. At least in view of the foregoing considerations further improvements are desirable in connection with LVRT capabilities.

### BRIEF SUMMARY

In one aspect, an electrolysis system comprises a transformer unit connected to an electrical grid. A plurality of rectifier units is connected in parallel circuit to the transformer unit to receive AC power from the transformer unit at respective AC sides of the rectifier units. A plurality of rows of electrolysis modules is connected to receive DC power from respective DC sides of the rectifier units. A DC current control loop includes a controller configured to generate a reference control parameter, such as a firing angle or a duty cycle, or a switching pattern, configured to control power switching circuitry in the rectifiers. A detector is configured to detect a condition of a Low Voltage Ride Through (LVRT) event by way of measuring AC voltage at the transformer unit. A DC current control loop is arranged to receive a feedforward signal configured to adjust the reference control parameter or the switching pattern considering the condition of the LVRT event, where, upon detection of the LVRT event, the feedforward signal is configured so that the reference control parameter or the switching pattern remains unchanged, and where, upon the measured AC voltage indicating recovery from the LVRT event, the feedforward signal is configured to impose a change to the reference control parameter or to the switching pattern, the change configured to reduce the amount of power delivered to the electrolysis modules.

In another aspect, a method for controlling the electrolysis system comprises measuring an AC voltage at the transformer unit indicative of a condition of a Low Voltage Ride Through (LVRT) event in connection with the electrolysis system; and generating a feedforward signal configured to adjust to adjust a reference control parameter, such as a firing angle or a duty cycle, or a switching pattern configured to control power switching circuitry in the rectifiers, where, upon detection of the LVRT event, configuring the feedforward signal to impose no change to the reference control parameter or the switching pattern, and where, upon the measured AC voltage indicating recovery from the LVRT event, configuring the feedforward signal to impose a change to the reference control parameter or the switching pattern.

### DESCRIPTION OF THE DRAWINGS

FIG. 1 is a simplified schematic of one example embodiment of an electrolysis system as may be connected in operation to receive power from an electrical grid.
FIG. 2 is a plot illustrating example Low Voltage Ride Through (LVRT) requirements, which electrolysis systems are expected to comply during operation.
FIG. 3 is a plot illustrating an example functional relationship between voltage and current in a typical electrolyzer.
FIG. 4 is a simplified block diagram of an example embodiment of a disclosed DC current loop with circuitry configured to adjust a reference control parameter, such as a firing angle or a duty cycle, or a switching pattern, to control power switching circuitry in the rectifier units based on a respective condition of the LVRT event.

### DETAILED DESCRIPTION OF EMBODIMENTS

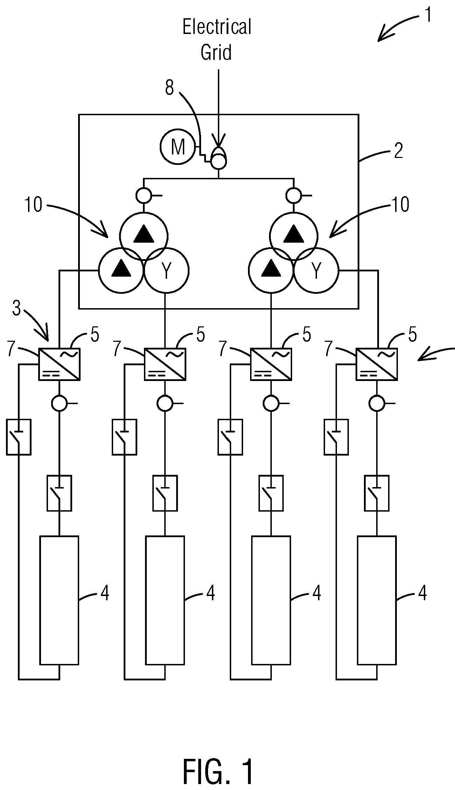

FIG. 1 is a simplified schematic of one example embodiment of an electrolysis system 1 that in operation is connected to an electrical grid. Electrolysis system 1 comprises a transformer unit 2, a plurality of rectifier units 3 connected in parallel circuit to transformer unit 2 to receive AC power from transformer unit 2 at respective AC sides 5 of the rectifier units 3, and a plurality of rows of electrolysis modules 4 connected to receive DC power from respective DC sides 7 of the rectifier units 3. Transformer unit 2 further comprises an autotransformer with a tap changer 8 and two three-winding transformers 10. In one example embodiment, winding transformers 10 have a phase difference of 15° between them and are arranged to drive the rectifier units to carry out a so-called 24-pulse rectifier operation. It is reiterated that this is just one example embodiment of an electrolysis system 1 and therefore the system shown in FIG. 1 should be construed in an example sense and not in a limiting sense.

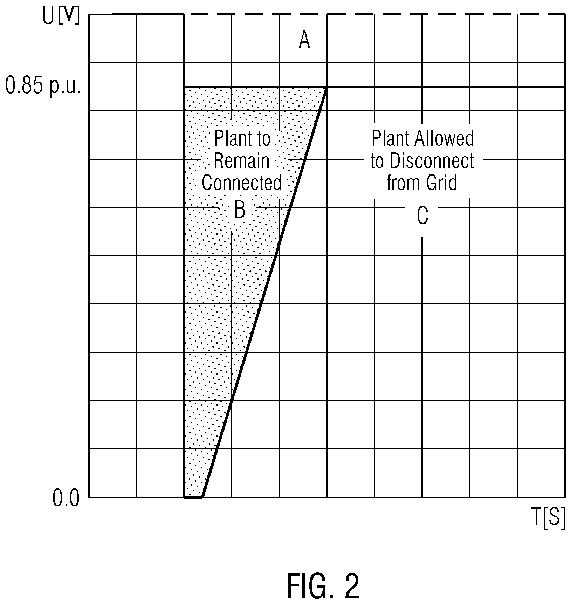

As will be appreciated by those skilled in the art, the grid operator specifies a curve (one example is shown in FIG 2) where a voltage deviation (e.g., a voltage dip) is plotted as a function of time during which the plant must remain connected (Area A + B) to the grid. Longer or deeper voltage dips allow a disconnection of the plant (Area C) from the grid. Similar requirements apply for transient voltage increases. As discussed in greater detail below, appropriately fulfilling such requirements can be challenging for the electrolysis system 1.

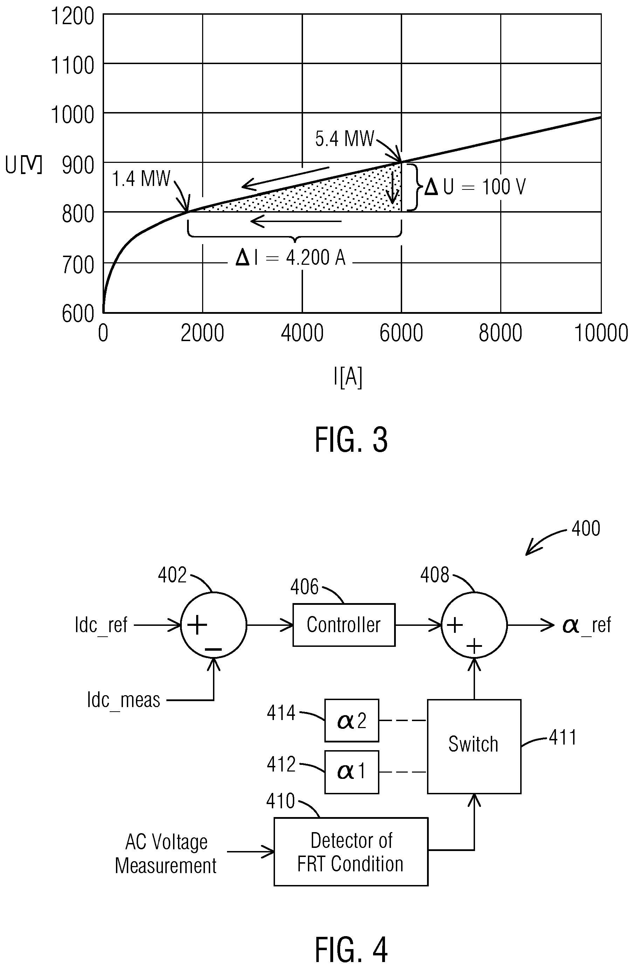

Since electrolysis characteristics are highly dependent on the input DC voltage available to the electrolysis modules, a slight voltage reduction can substantially change the input power, as can be appreciated in FIG. 3. If, for example, the electrochemical cell voltage drops below the Nernst voltage (about 1.23 V for water electrolysis), the gas production and thus the electrolysis process would stop completely. As would be appreciated by the artisan, the Nernst voltage is a theoretical voltage calculated using the Nernst equation that predicts the potential of an electrochemical cell under ideal, equilibrium conditions.

In this example, let us presume that a nominal system voltage at beginning of life is at about 980 V, while the threshold for hydrogen production is in the range of 720 V. Should the input voltage drop quickly to, for example, 0.73 p.u., no power can be consumed anymore by the electrolysis system. This would lead to a massive imbalance between power generation and consumption, such as when several GW of electrolysis capacity are simultaneously affected, while the electrolyzer units continue to operate with just slightly reduced power compared to the pre-fault values.

As noted above, in this example, the threshold for gas production is in the range of 720 V, which means that in case the voltage drops below this level, there will be no DC current flowing through the DC side, thereby halting the production of hydrogen. As would be appreciated by one skilled in the art, in case the voltage level recovers after a relatively short period of time, the involved controller/s are normally designed in such a way that the DC current would ramp up (after the fault is cleared) following pre-defined ramp up rates configured for appropriate reinitialization of the electrolysis system and for resuming steady state operation. This ensures that the increase in the DC current along with the gas production on the process side are appropriately controlled and that all relevant parameters that can lead to a trip of the electrolysis plant remain within applicable limits.

As will be appreciated by one skilled in the art, electrolyzer systems are generally controlled by proportional-integral (PI) controllers or proportional-integral-derivative (PID) controllers. Regardless of the specific control modality being utilized, such controllers exhibit a delay time between the time the voltage deviation event begins and the time where the resulting overcurrent (or undercurrent) has been appropriately regulated.

One aspect that is believed that has not been sufficiently investigated prior to the instant disclosure is the fact that the moment the fault is cleared, especially for cases where the voltage drop is just slightly below the designed operation range, such as grid voltage levels slightly below 90% or 85% of the rated grid voltage; then under these conditions, the electrolyzers are generally designed in such a way that the power from the grid continues to be consumed.

Accordingly, if the fault (e.g., the voltage dip) is not so severe so that the DC voltage does not drop below the polarization voltage (i.e., the voltage difference that arises when the cell is under load or not in equilibrium) then in this scenario, during the fault, the electrolyzer will continue conducting the DC current and therefore will produce hydrogen even though such production will be at a reduced capacity than under normal operational conditions. This is enabled by way of appropriate rectifier control, which, for example, would control the firing angle for firing the rectifiers (i.e., firing the power switching circuitry in the rectifiers, such as thyristors, IGBTs, etc.) to a nominal value, such as 0°, and thus use any reserve for which the rectifiers were designed.

As would be appreciated by the artisan, in the context of power electronics, the firing angle refers to the phase angle of the AC input voltage (e.g., a sinusoid) when the gate current is applied to the power switching circuitry in the rectifier units to turn on such power switching circuitry. A smaller firing angle results in more power being delivered, as the power switch conducts for a relatively larger portion of the AC cycle. Conversely, a larger firing angle delays triggering the power switch, thus reducing the amount of power delivered.

As would be further appreciated by the artisan, in the context of power electronics, duty cycle refers to the percentage of time a power switch is "on" compared to the total time of a cycle. The duty cycle directly impacts the output DC voltage. A higher duty cycle generally results in a higher average DC voltage. Conversely, a lower duty cycle results in a relatively lower average DC voltage.

Similarly, switching patterns, such as can involve pulse width modulation (PWM), are configured to determine the sequence by which the power switches are switched on and off and in turn to control the output power. By adjusting the pulse width (the time the switch is ON) within the PWM pattern, the average voltage and therefore the output power can be controlled. The foregoing are examples of alternative modalities for controlling comparable power switching circuitry depending on the specific converter technology involved.

While continued operation of the electrolyzers is desirable, it should be appreciated that as the electrolyzers continue operating in such situations involving not substantial LVRT deviations, this can pose certain challenges for the electrolyzers. More specifically, the moment the fault (e.g., the voltage dip) is cleared, the DC current will immediately return to its pre-fault value, which in most cases would be at or close to a full-load operating point.

The foregoing challenges mainly arise due to the following: during the fault (e.g., during the LVRT event), in our example, the rectifier control is configured to set the firing angle to a predefined nominal value (such as 0° in our example). If the recovery of the AC voltage is presumed to be instantaneous, then the rectifier control would need to measure this voltage, measure the DC current and correspondingly adjust the firing angle. Alternatively, also the nominal duty cycle or the switching pattern of the rectifier system would initially stay unaffected.

However, as would be appreciated by the artisan, the time involved for obtaining the voltage measurements and re-synchronization for appropriate rectifier control is generally in the order of tens of ms and this is problematic. More specifically, in case the voltage instantaneously recovers and the firing angle is at 0°, the current would directly overshoot to values that can be substantially higher than the rated DC current. This overshoot can have unwanted implications on the process side and, for example, can negatively interact with valve control, for example, which can potentially lead to undesirable shutdown of the electrolyzer system. Therefore, in such situations, as elaborated in greater detail below, we generate a feedforward signal (conceptually analogous to a fast-forward action) configured to advance the reference firing angle by a fixed value, and in effect advantageously bypass the time delay that the controller otherwise would need to synchronize and react. Alternatively, as noted above, the duty cycle or switching pattern for comparable power switching circuitry can be adapted in lieu of the firing angle.

This is where our disclosed innovative approach comes in. FIG. 4 is a simplified block diagram of an example embodiment of a disclosed DC current loop 400 with circuitry configured to adjust a reference firing angle (α_ref) based on a respective condition of the LVRT event. As shown in FIG. 4, DC current control loop 400 includes a controller 406 configured to generate the reference firing angle α_ref. A detector 410 (such as a computerized detector) is configured to detect the respective condition of the LVRT event by way of measuring AC voltage at the transformer unit and comparing the measured voltage relative to predefined voltage threshold/s. Alternatively, as noted above, the duty cycle or the switching pattern for comparable power switching circuitry can be adapted in lieu of the firing angle.

In one example embodiment, the measured AC voltage is obtained at the primary side of transformer unit 2 (FIG. 1). Alternatively, the measured AC voltage can be obtained at the secondary side of transformer unit 2, provided one considers the position of the tap changer 8 (FIG. 1) of the transformer unit 2.

In operation, detector 410 is configured to generate a trigger signal based on the detected condition of the LVRT event by detector 410. One condition that can be detected by detector 410 is detection of the occurrence of the LVRT event, such as when the measured AC voltage is outside the applicable voltage threshold. Another condition that can be detected by detector 410 is detection of recovery from the LVRT event, such as when the measured AC voltage is within the applicable voltage threshold.

The trigger signal from detector 410 is supplied to a switch 411 so that during the LVRT event, for this condition, switch 411 is connected to a first memory 412 that stores a value α1 for adjusting the reference firing angle α_ref from controller 406. That is, when detector 410 detects occurrence of the LVRT event, switch 411 feeds the value α1 to a node 408 of DC current control loop 400 to be additively combined with the reference firing angle α_ref. Conversely, upon detector 410 detecting recovery from the LVRT event, for this condition, switch 411 is connected to a second memory 414 that stores a value α2 for adjusting the reference firing angle α_ref. That is, when detector 410 detects recovery from the LVRT event, switch 411 feeds the value α2 to node 408 of DC current control loop 400 so that the value α2 (in lieu of the α1 value) is additively combined with the reference firing angle α_ref.

It will be appreciated that the signal fed from switch 411to node 408 constitutes a feedforward signal that practically instantaneously can advance the reference firing angle α_ref from controller 406, once clearance of the LVRT event has been detected and this is effective to quickly and reliably counteract the amount of overshoot in the DC current. Alternatively, in lieu of the firing angle, depending on the converter technology involved, a duty cycle or other switching pattern can be changed by means of the feedforward signal.

In one example embodiment, the value α1 stored in first memory 412 is zero so that during the LVRT event, the reference firing angle α_ref is left unchanged when α1 is additively combined with the reference firing angle α_ref from controller 406. By way of comparison, the value α2 stored in second memory 414 is chosen to provide a desired advance to the reference firing angle α_ref from controller 406. The value α2 (the desired advance to the firing angle) can be tailored based on the needs of a given application. By way of example, if for a given application an advance of 30 degrees is desired for the reference firing angle α_ref from controller 406, then in this example α2 would have a value of 30 degrees. Alternatively, the duty cycle (such as when using an intermediate buck-converter) for comparable power switching circuitry can be changed in a similar way leading to similar advantageous results. Alternatively, the switching pattern for comparable power switching circuitry can be changed in a similar way leading to similar advantageous results.

Although FIG. 4 is being described in terms of either no advance (e.g., α1 is zero) to the reference firing angle α_ref from controller 406 during the LVRT event and, a one-shot advance (such as when α2 is 30 degrees) to the reference firing angle α_ref from controller 406 upon recovery of the LVRT event, it should be appreciated that the advance to the reference firing angle α_ref from controller 406 need not be advanced just in one shot.

It is contemplated that there may be situations where the circuitry shown in FIG. 4 may be readily adapted to flexibly accommodate various operational situations. Let us say that we define several threshold values in detector 410 to, for example, quantify the severity of the voltage deviation. For example, a first threshold value may be indicative that a 10% higher AC input voltage has been measured, and in this case one would desire to advance the firing angle by 10° upon detecting recovery from the LVRT event. A second threshold value may be indicative that a 20% higher input AC voltage has been measured, and in this case one would desire to advance the firing angle by 30° upon detecting recovery from the LVRT event. Similarly, a third threshold may be indicative that at least a 30 % higher AC input voltage has been measured, and in this case one would desire to advance the firing angle by 50° upon detecting recovery from the LVRT event.

In the foregoing example, memory 412 would store the value α1 = 0 degrees, memory 414 would store the value of 10 degrees, third and fourth memories (not shown) would respectively store values of 30 degrees and 50 degrees. The key point being that the degree of firing angle advancement can be flexibly tailored considering the severity of the involved deviation. It will be appreciated that other control parameters, such as the duty cycle or the switching pattern for comparable power switching circuitry can be similarly adapted in multiple levels or steps in lieu of a single shot.

The description below will provide some numerical examples to better conceptualize technical benefits relating to our disclosed embodiments. The equation below can be used for calculating the DC output voltage of semiconductor-based power circuitry, such as thyristors, which are commonly used in electrolyzer applications. It should be appreciated that this is just an example since our disclosed implementation is not limited to any particular type of power switching circuitry that may be involved in connection with the rectifiers:
$Vdc = \left(3√2/π\right) * Vline * Cos \left(α\right) = 1.35 * Vline * Cos \left(α\right) ,$ ,
where:
- Vdc: DC output voltage
- Vline: AC line-to-line voltage
- α: Firing angle

Let us presume the AC line-to-line voltage in one example application under baseline conditions is about 600 Volts and the firing angle being applied is 0 degrees; then from the equation above the DC output voltage is about 810 Volts for this example baseline condition.

Let us further presume that there is a 20 % transient increase in the AC line-to-line voltage and that the firing angle remain at 0 degrees (i.e., no advance to the reference firing angle), then from the equation above the DC output voltage would be about 972 volts, which corresponds to a change (Δ) in the DC output voltage of about 122 Volts relative to the baseline condition. That is, ΔVdc = 122 Volts with a fire angle of zero degrees under the transient voltage increase. From the plot shown in FIG. 3, it can be estimated that the DC current would increase by about 4.5 kA.

However, if the firing angle instead of remaining at zero degrees is instantaneously advanced by, for example, 30 degrees, then the DC output voltage from the equation above would be about 842 Volts (instead of 972 Volts), which corresponds to a change in the DC output voltage of about 53 Volts (instead of about 122 Volts). That is, ΔVdc = 53 Volts with a fire angle of 30 degrees under the transient voltage increase. From the plot shown in FIG. 3, it can be estimated that with the firing angle of 30 degrees, then the DC current would increase approximately by just about one half the value of the current increase of 4.5 kA with the firing angle of zero degrees.

The foregoing is a solution that in operation advantageously permits the electrolyzer system to remain connected without having to wait for resynchronization by the controller in the DC current control loop since the benefits resulting from advancing the firing angle are practically instantaneous (e.g., in the order of us) as opposed to having to wait typically in the order of 100 ms. Moreover, electrical/electronic components of the electrolysis system would be subject to just a portion (in our example just about one half) of the value of DC current that otherwise the electrolysis system would be subjected to without advancement of the firing angle. That is, our disclosed solution effectively inhibits the level of electrical stress to which such components would otherwise be subjected to, and this enhances the reliability and durability of the system.

Our disclosure above has focused on a thyristor-based system, where a fixed firing angle is added to advance the control the firing angle of the system considering a respective condition of the LVRT event. As noted above; however, other system modalities can also benefit from our disclosed concepts. For example, in a DC/DC based electrolysis system that may involve converters, instead of generating the feedforward signal to adjust the firing angle, one can alternatively configure the feedforward signal to change the nominal duty cycle or to change the switching pattern considering the respective condition of the LVRT event.

## Claims

1. An electrolysis system comprising:
a transformer unit connected to an electrical grid;
a plurality of rectifier units connected in parallel circuit to the transformer unit to receive AC power from the transformer unit at respective AC sides of the rectifier units;
a plurality of rows of electrolysis modules connected to receive DC power from respective DC sides of the rectifier units;
a DC current control loop includes a controller configured to generate a reference control parameter or a switching pattern configured to control power switching circuitry in the rectifiers;
a detector configured to detect a condition of a Low Voltage Ride Through (LVRT) event by way of measuring AC voltage at the transformer unit; and
a DC current control loop arranged to receive a feedforward signal configured to adjust the reference control parameter or the switching pattern considering the condition of the LVRT event,
wherein, upon detection of the LVRT event, the feedforward signal is configured so that the reference control parameter or the switching pattern remains unchanged, and
wherein, upon the measured AC voltage indicating recovery from the LVRT event, the feedforward signal is configured to impose a change to the reference control parameter or to the switching pattern, the change configured to reduce the amount of power delivered to the electrolysis modules.

2. The electrolysis system of claim 1, wherein the measured AC voltage at the transformer unit is obtained at a primary side of the transformer unit.

3. The electrolysis system of claim 1, wherein the transformer unit comprises a tap changer, and wherein the measured AC voltage is obtained at a secondary side of the transformer unit and the measured AC voltage is adjusted considering a position of the tap changer of the transformer unit.

4. The electrolysis system of claim 1, wherein the reference control parameter is a firing angle for driving the power switching circuitry.

5. The electrolysis system of claim 4, wherein the firing angle remains unchanged upon detection of the LVRT event and wherein the firing angle is advanced by a predefined angle upon detection of recovery from the LVRT event.

6. The electrolysis system of claim 1, wherein the reference control parameter is a duty cycle for driving the power switching circuitry.

7. The electrolysis system of claim 6, wherein the duty cycle remains unchanged upon detection of the LVRT event and wherein the duty cycle is shifted from a baseline value to a predefined value upon detection of recovery from the LVRT event.

8. The electrolysis system of claim 1, wherein the DC current control loop comprises a switch responsive to a trigger signal indicative of the condition of the LVRT event, wherein upon detection of the LVRT event the switch is connected to a first memory arranged to store a first value so that the reference control parameter or the switching pattern remains unchanged, and wherein, upon clearance of the LVRT event, the switch is connected to a second memory arranged to store a second value to impose the change to the reference control parameter or to the switching pattern.

9. A method for controlling an electrolysis system comprising a transformer unit, rectifier units connected in parallel circuit to the transformer unit, and a plurality of rows of electrolysis modules connected at respective DC sides of the rectifier units, the method comprising:
measuring an AC voltage at the transformer unit indicative of a condition of a Low Voltage Ride Through (LVRT) event in connection with the electrolysis system; and
generating a feedforward signal configured to adjust to adjust a reference control parameter or a switching pattern configured to control power switching circuitry in the rectifiers;
wherein, upon detection of the LVRT event, configuring the feedforward signal to impose no change to the reference control parameter or the switching pattern,
wherein, upon the measured AC voltage indicating recovery from the LVRT event, configuring the feedforward signal to impose a change to the reference control parameter or the switching pattern.

10. The method of claim 9, wherein the measuring of the AC voltage at the transformer unit is at a primary side of the transformer unit.

11. The method of claim 9, wherein the measuring of the AC voltage at the transformer unit is at a secondary side of the transformer unit considering a position of a tap changer of the transformer unit.

12. The method of claim 9, wherein the reference control parameter is a firing angle for driving the power switching circuitry.

13. The method of claim 9, wherein the reference control parameter is a duty cycle for driving the power switching circuitry.

14. The method of claim 12, wherein, upon detection of the LVRT event, not advancing the firing angle, and wherein, upon detection of recovery from the LVRT event, advancing the firing angle by a predefined angle.

15. The method of claim 13, wherein, upon detection of the LVRT event, not shifting the duty cycle from a baseline value to a predefined value, and, wherein upon detection of recovery from the LVRT event, shifting the duty cycle from the baseline value to the predefined value.
